# EUROPEAN PATENT APPLICATION

(11) **EP 3 943 303 A1**
(43) Date of publication of application: **26.01.2022**
(21) Application number: 21175336.3
(22) Date of filing: 21.05.2021
(51) Int. Cl.: B32B 39/00, B32B 38/18, G02F 1/13, H01L 51/56

(54) **ATTACHING APPARATUS WITH INTERNAL CIRCULATION MECHANISM**

(30) Priority: 24.07.2020 US 202063056117 P; 24.07.2020 US 202063056137 P; 20.11.2020 TW 109140757
(71) Applicant: Mirle Automation Corporation, Hsinchu 30076 (TW)
(72) Inventor: LIN, HUNG-PIN, 30076 HSINCHU (TW); CHEN, SHIH-CHUN, 30076 HSINCHU (TW); LEE, YEN-DAO, 30076 HSINCHU (TW)
(74) Representative: DREISS Patentanwälte PartG mbB

(57) **Abstract**

An attaching apparatus (1000) with an internal circulation mechanism is provided and includes a preparing station (200), an attaching station (100), an upper transferring mechanism (300) and a lower transferring mechanism (400) that are movable between the preparing station (200) and the attaching station (100), and an attaching intermediary (500a). The preparing station (200) includes a feeding platform (210) and a pre-attaching platform (220), which are configured to attach an attaching object (O) onto the attaching intermediary (500a) by being movable relative to other, so that the attaching intermediary (500a) is in a loading mode. The attaching station (100) includes au upper pressing mechanism (110) and a lower pressing mechanism (120), which are configured to attach the attaching object (O) onto an attached object (G) held by the upper pressing mechanism (110), so that the attaching intermediary (500a) is in an unloading mode. The upper transferring mechanism (300) is configured to transfer the attaching intermediary (500a) that is in the unloading mode to the pre-attaching platform (220).

## Description

### FIELD OF THE DISCLOSURE

The present disclosure relates to an attaching apparatus, and more particularly to an attaching apparatus with internal circulation mechanism.

### BACKGROUND OF THE DISCLOSURE

A conventional attaching apparatus includes a plurality of carriers for carrying attached objects and is provided with an external circulation mechanism assembled to an outer side thereof, so that the carriers of the conventional attaching apparatus can be transferred by the external circulation mechanism. However, the overall volume of the conventional attaching apparatus and the external circulation mechanism after installation is too large, and certain components in the conventional attaching apparatus are frequently in an idle state, which causes inefficiency.

### SUMMARY OF THE DISCLOSURE

In response to the above-referenced technical inadequacy, the present disclosure provides an attaching apparatus with internal circulation mechanism to effectively improve on the issues associated with conventional attaching apparatuses.

In one aspect, the present disclosure provides an attaching apparatus with internal circulation mechanism. The attaching apparatus includes a preparing station, an attaching station, an upper transferring mechanism, a lower transferring mechanism, and an attaching intermediary. Any one of the upper transferring mechanism and the lower transferring mechanism is movable between the preparing station and the attaching station, and the attaching intermediary is selectively in a loading mode or an unloading mode. The preparing station includes a feeding platform and a pre-attaching platform. The feeding platform is configured to receive an attaching object. The pre-attaching platform is configured to receive the attaching intermediary that is in the unloading mode and that is transferred from the upper transferring mechanism. The feeding platform and the pre-attaching platform are configured to attach the attaching object located at the feeding platform onto the attaching intermediary that is in the unloading mode and that is located at the pre-attaching platform by being movable relative to each other, so that the attaching intermediary is in the loading mode. The attaching station includes an upper pressing mechanism and a lower pressing mechanism. The upper pressing mechanism is configured to hold an attached object. The lower pressing mechanism is configured to receive the attaching intermediary that is in the loading mode and that is transferred from the lower transferring mechanism. The upper pressing mechanism and the lower pressing mechanism are configured to implement an attaching process by being moved relative to each other so as to attach the attaching object located at the lower pressing mechanism onto the attached object held by the upper pressing mechanism, resulting the attaching intermediary to be in the unloading mode. The upper transferring mechanism is configured to transfer the attaching intermediary, which is located at the lower pressing mechanism and is in the unloading mode, to the pre-attaching platform.

Therefore, the components of the attaching apparatus in the present disclosure can be efficiently designed to allow the attaching intermediary to be repeatedly operated in the attaching apparatus, so that the attaching apparatus can be provided without any external circulation mechanism for carrying or transferring the attaching intermediary. Accordingly, the operation efficiency of the attaching apparatus can be effectively increased, and the volume of the attaching apparatus can be reduced.

These and other aspects of the present disclosure will become apparent from the following description of the embodiment taken in conjunction with the following drawings and their captions, although variations and modifications therein may be affected without departing from the scope of the novel concepts of the disclosure.

### BRIEF DESCRIPTION OF THE DRAWINGS

The described embodiments may be better understood by reference to the following description and the accompanying drawings, in which:
FIG. 1 to FIG. 7 are schematic views showing an attaching apparatus with an internal circulation mechanism operating in different positions according to a first embodiment of the present disclosure;
FIG. 8 to FIG. 13 are schematic views showing an attaching apparatus with an internal circulation mechanism operating in different positions according to a second embodiment of the present disclosure;
FIG. 14 is a schematic view showing an attaching station of an attaching apparatus with an internal circulation mechanism when an upper pressing mechanism and a lower pressing mechanism are at an open position according to a third embodiment of the present disclosure;
FIG. 15 is a schematic view showing the attaching station when the upper pressing mechanism and the lower pressing mechanism are at a sealed position according to the third embodiment of the present disclosure;
FIG. 16 is a schematic top view showing an attaching intermediary of FIG. 14;
FIG. 17 is a schematic side view of FIG. 16;
FIG. 18 is a schematic top view showing the attaching intermediary of FIG. 16 in an operation state;
FIG. 19 is a schematic side view of FIG. 18;
FIG. 20 is a schematic view showing the attaching station of FIG. 15 used to implement an attaching process in a first manner;
FIG. 21 is a schematic view showing the attaching station of FIG. 15 used to implement the attaching process in a second manner;
FIG. 22 is a schematic view showing that the attaching process has been implemented by the attaching station of FIG. 15;
FIG. 23 is a schematic view showing an attaching station when an upper pressing mechanism and a lower pressing mechanism are at an open position according to a fourth embodiment of the present disclosure;
FIG. 24 is a schematic view showing the attaching station when the upper pressing mechanism and the lower pressing mechanism are at a sealed position according to the fourth embodiment of the present disclosure;
FIG. 25 is a schematic top view showing an attaching intermediary of FIG. 23;
FIG. 26 is a schematic side view of FIG. 25;
FIG. 27 is a schematic top view showing the attaching intermediary of FIG. 25 in an operation state;
FIG. 28 is a schematic side view of FIG. 27;
FIG. 29 is a schematic view showing the attaching station of FIG. 24 used to implement an attaching process in a first manner;
FIG. 30 is a schematic view showing the attaching station of FIG. 24 used to implement the attaching process in a second manner;
FIG. 31 is a schematic view showing the attaching process has been implemented by the attaching station of FIG. 24; and
FIG. 32 is a schematic view showing the attaching station of FIG. 31 continuing to implement an additional attaching process.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

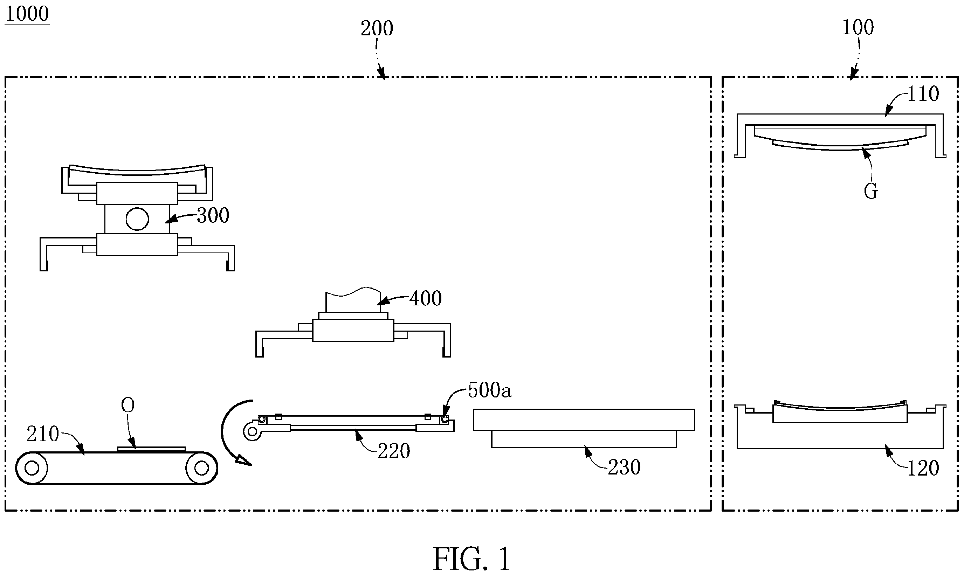

Referring to FIG. 1 to FIG. 7, a first embodiment of the present disclosure provides an attaching apparatus 1000 with internal circulation mechanism. The attaching apparatus 1000 includes a preparing station 200, an attaching station 100, an upper transferring mechanism 300, a lower transferring mechanism 400, and at least one attaching intermediary 500a. Any one of the upper transferring mechanism 300 and the lower transferring mechanism 400 is movable between the preparing station 200 and the attaching station 100. It should be noted that that at least one attaching intermediary 500a in the present embodiment is one for clearly describing the operation of the attaching apparatus 1000, but the present disclosure is not limited thereto.

Moreover, the attaching intermediary 500a is selectively in a loading mode or an unloading mode, and the attaching intermediary 500a in the present embodiment is configured to be only moved between the preparing station 200 and the attaching station 100 through the upper transferring mechanism 300 or the lower transferring mechanism 400. In other words, the attaching apparatus 1000 of the present embodiment is provided without any external circulation mechanism for carrying or transferring the attaching intermediary 500a. The following description describes the structure and connection relationship of the attaching apparatus 1000.

As shown in FIG. 1, the preparing station 200 includes a feeding platform 210, a pre-attaching platform 220 arranged adjacent to the feeding platform 210, and a tearing platform 230 that is arranged at a downstream of the pre-attaching platform 220. The preparing station 200 in the present embodiment is described by including the feeding platform 210, the pre-attaching platform 220, and the tearing platform 230, but the present disclosure is not limited thereto. For example, in other embodiments of the present disclosure, the preparing station 200 can be provided without the tearing platform 230 or can further include other components according to design requirements.

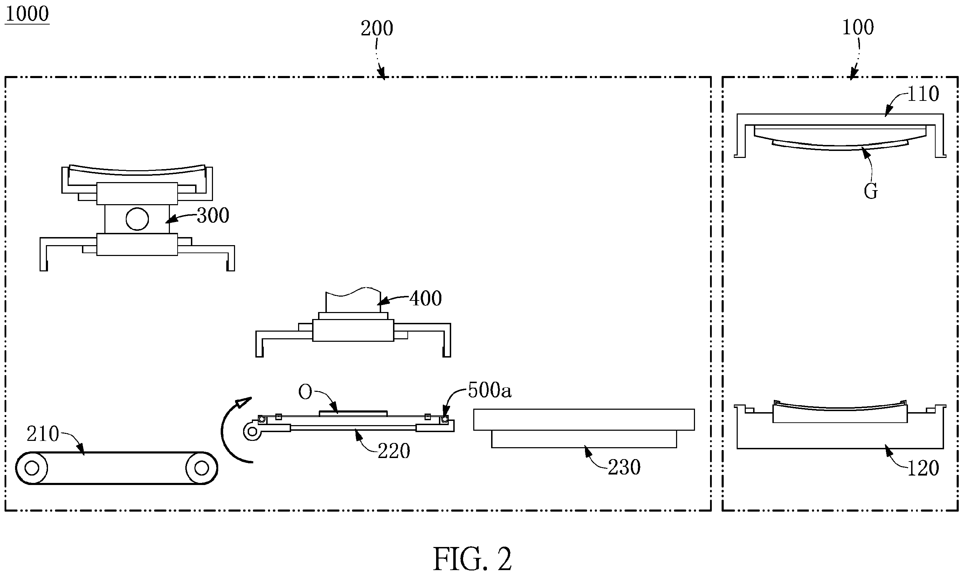

The feeding platform 210 is configured to receive an attaching object O, and the pre-attaching platform 220 is configured to receive the attaching intermediary 500a that is in the unloading mode and that is transferred from the upper transferring mechanism 300. For example, as shown in FIG. 1 and FIG. 2 of the present embodiment, the feeding platform 210 carries the attaching object O, the pre-attaching platform 220 carries the attaching intermediary 500a that is in the unloading mode, and the feeding platform 210 and the pre-attaching platform 220 are configured to attach the attaching object O located at the feeding platform 210 onto the attaching intermediary 500a that is in the unloading mode and that is located at the pre-attaching platform 220 by being movable relative to each other, so that the attaching intermediary 500a is in the loading mode.

Specifically, as shown in FIG. 1 and FIG. 2, the feeding platform 210 can be used to continuously receive a plurality of attaching objects O from an external part by manual placement or mechanical transportation, and the pre-attaching platform 220 can be moved or/and rotated relative to the feeding platform 210, so that the pre-attaching platform 220 can move the attaching intermediary 500a to abut against the attaching object O for adhering the attaching object O to the attaching intermediary 500a. Hereafter, the pre-attaching platform 220 is moved to a predetermined position (e.g., an initial position) for allowing the lower transferring mechanism 400 to catch or transfer the attaching intermediary 500a that is in the loading mode.

The attaching station 100 includes an upper pressing mechanism 110 and a lower pressing mechanism 120 that corresponds in position to the upper pressing mechanism 110. Moreover, the attaching station 100 in the present embodiment is described by including the upper pressing mechanism 110 and the lower pressing mechanism 120, but the present disclosure is not limited thereto. For example, in other embodiments of the present disclosure, the attaching station 100 can further include other components (e.g., a suction mechanism) according to design requirements.

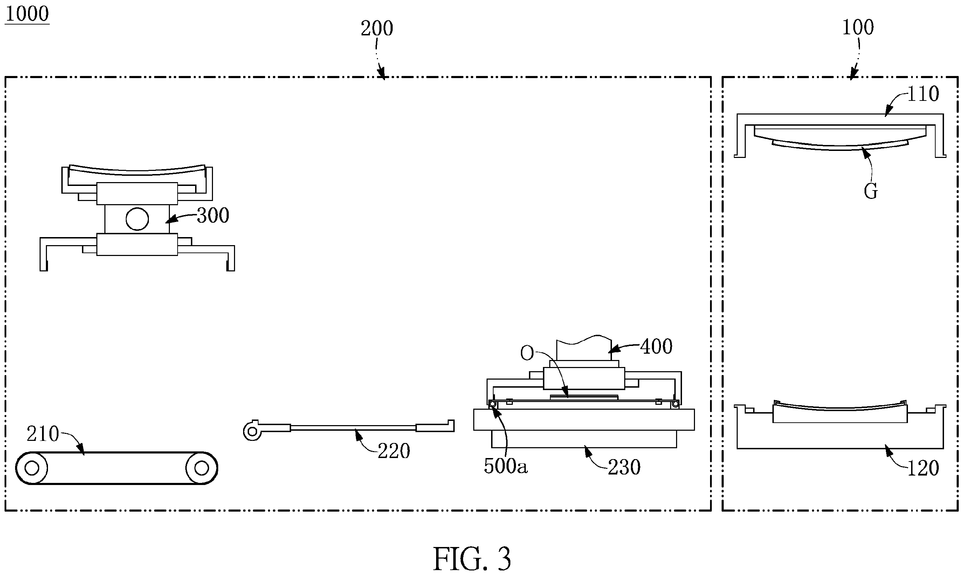

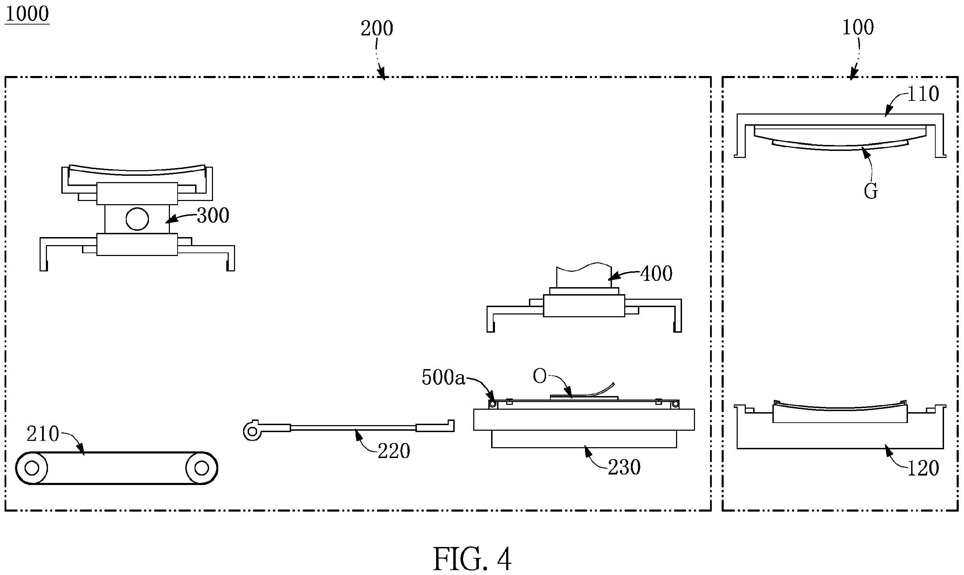

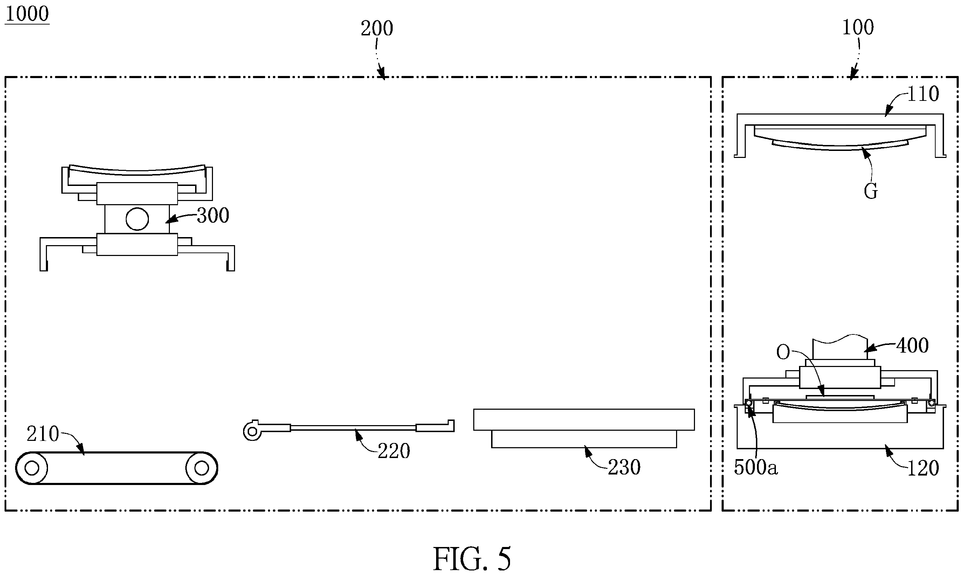

As shown in FIG. 2 to FIG. 5, the upper pressing mechanism 110 is configured to hold an attached object G, and the lower pressing mechanism 120 is configured to receive the attaching intermediary 500a that is in the loading mode and that is transferred from the lower transferring mechanism 400. In the present embodiment, before the lower pressing mechanism 120 receives the attaching intermediary 500a that is in the loading mode and that is transferred from the lower transferring mechanism 400, the lower transferring mechanism 400 is configured to transfer the attaching intermediary 500a, which is in the loading mode and is located at the pre-attaching platform 220 (as shown in FIG. 2 and FIG. 3), to the tearing platform 230, so that the tearing platform 230 is configured to tear off a release film (as shown in FIG. 4) adhered to the attaching object G for allowing the lower transferring mechanism 400 to transfer the attaching intermediary 500a from the tearing platform 230 to the lower pressing mechanism 120 (as shown in FIG. 5), but the present disclosure is not limited thereto. For example, in other embodiments of the present disclosure, the tearing platform 230 can be omitted, and the lower transferring mechanism 400 can directly transfer the attaching intermediary 500a in the loading mode from the pre-attaching platform 220 to the lower pressing mechanism 120.

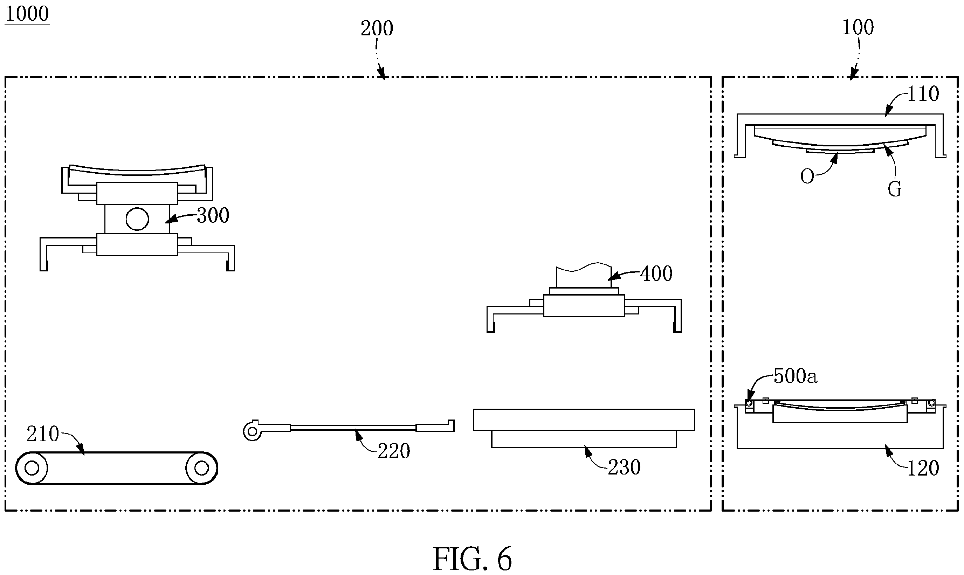

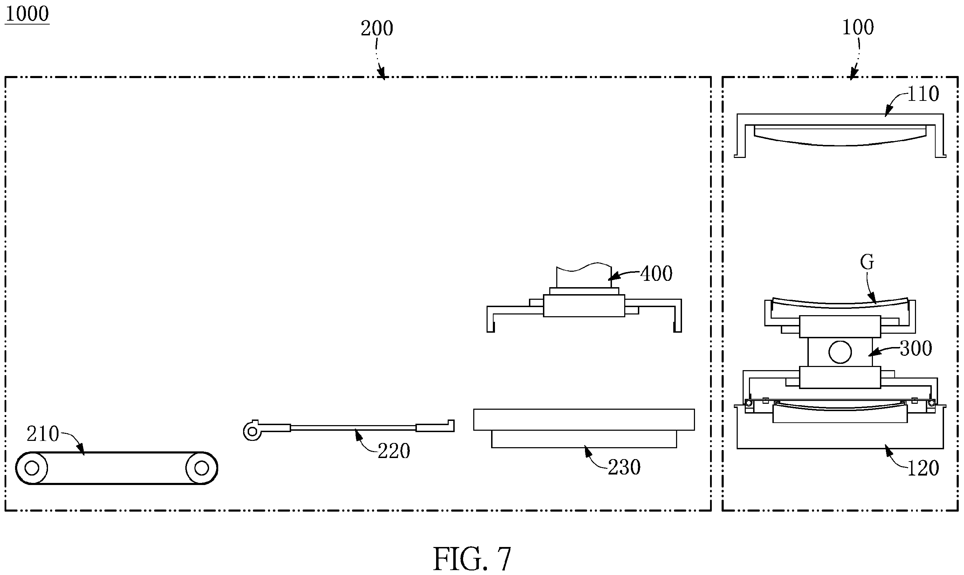

Specifically, as shown in FIG. 6, the upper pressing mechanism 110 and the lower pressing mechanism 120 are configured to implement an attaching process by being moved relative to each other so as to attach the attaching object O located at the lower pressing mechanism 120 onto the attached object G held by the upper pressing mechanism 110, resulting the attaching intermediary 500a to be in the unloading mode. In addition, as shown in FIG. 7 and FIG. 1, the upper transferring mechanism 300 is configured to transfer the attaching intermediary 500a, which is located at the lower pressing mechanism 120 and is in the unloading mode, to the pre-attaching platform 220.

It should be noted that the upper transferring mechanism 300 in the present embodiment can be used to transfer the attached object G for reducing the quantity of components in the attaching apparatus 1000. For example, as shown in FIG. 7, when the upper transferring mechanism 300 is moved to the attaching station 100, the upper transferring mechanism 300 is configured to transfer the attaching intermediary 500a that is in the unloading mode and that is located at the lower pressing mechanism 120, and then the upper transferring mechanism 300 is configured to transfer another attached object G to the upper pressing mechanism 110 for a next attaching process, but the present disclosure is not limited thereto.

For example, in other embodiments of the present disclosure, the upper transfer mechanism 300 can only be used to transfer the attaching intermediary 500a that is in the unloading mode and that is located at the lower pressing mechanism 120, and the attached object G is disposed on the upper pressing mechanism 110 by other manners (e.g., manual placement or mechanical transportation).

In addition, the attaching object O and the attached object G, which are attached to each other by the upper pressing mechanism 110 and the lower pressing mechanism 120, can be adjusted or changed according to design requirements. For example, connection surfaces of the attaching object O and the attached object G can be flat surfaces or curved surfaces.

In conclusion, the components of the attaching apparatus 1000 in the present embodiment can be efficiently designed to allow the attaching intermediary 500a to be repeatedly operated in the attaching apparatus 1000, so that the attaching apparatus 1000 can be provided without any external circulation mechanism for carrying or transferring the attaching intermediary 500a. Accordingly, the operation efficiency of the attaching apparatus 1000 can be effectively increased, and the volume of the attaching apparatus 1000 can be reduced.

### [Second Embodiment]

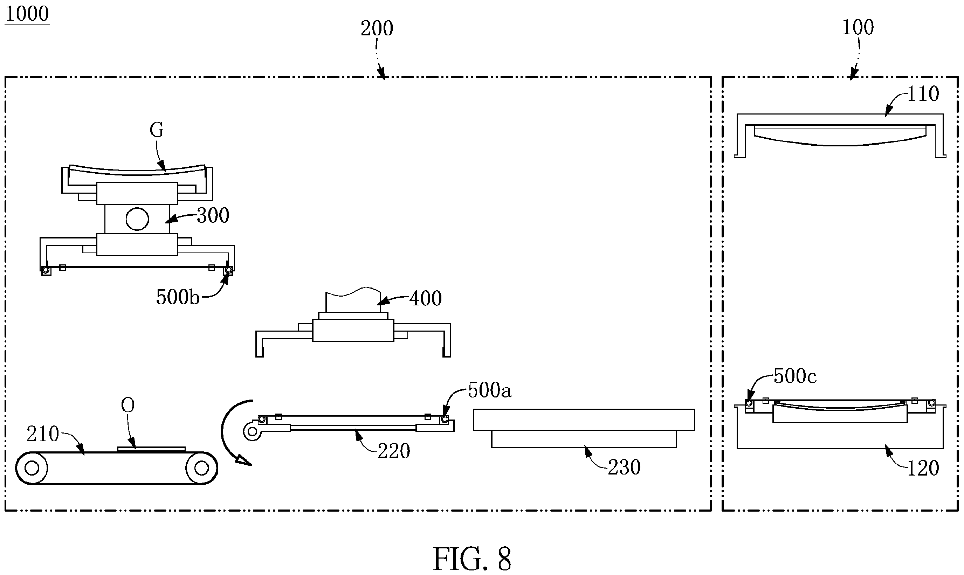

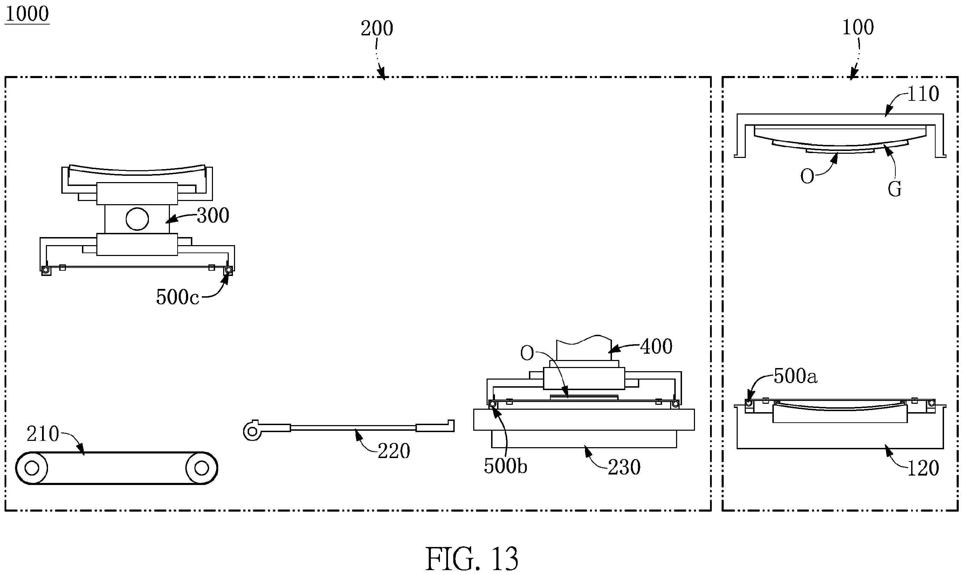

Referring to FIG. 8 to FIG. 13, a second embodiment of the present disclosure is similar to the first embodiment of the present disclosure. For the sake of brevity, descriptions of the same components in the first and second embodiments of the present disclosure will be omitted herein, and the following description only discloses different features between the first and second embodiments.

In the present embodiment, a quantity of the attaching intermediary 500a of the attaching apparatus 1000 is more than one. The attaching intermediaries 500a, 500b, and 500c are respectively arranged among different components in the attaching apparatus 1000, so that the different components in the attaching apparatus 1000 corresponding in position to the attaching intermediaries 500a, 500b, and 500c can be simultaneously operated for effectively increasing the operation efficiency of the attaching apparatus 1000. Moreover, the quantity of the attaching intermediaries 500a, 500b, and 500c of the attaching apparatus is three, but the present disclosure is not limited thereto.

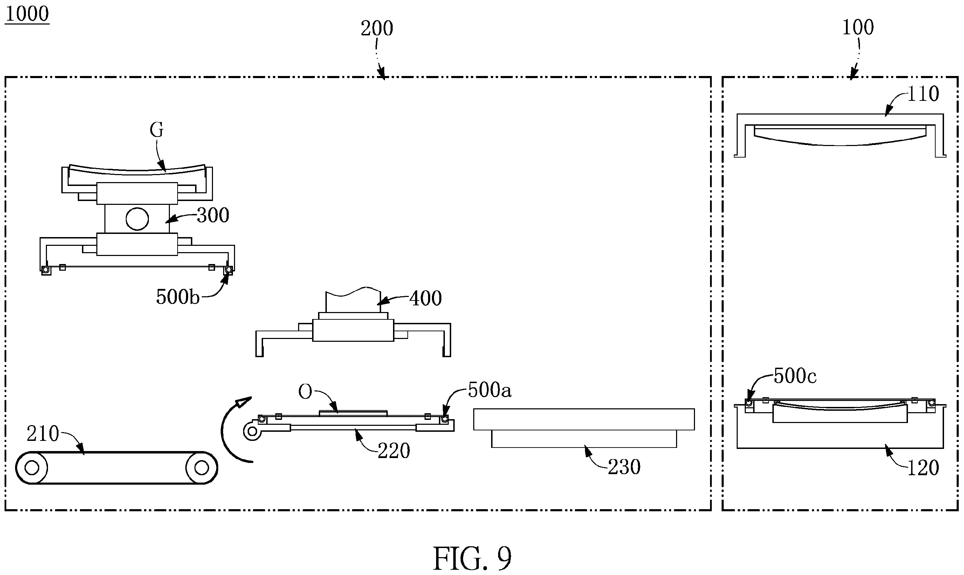

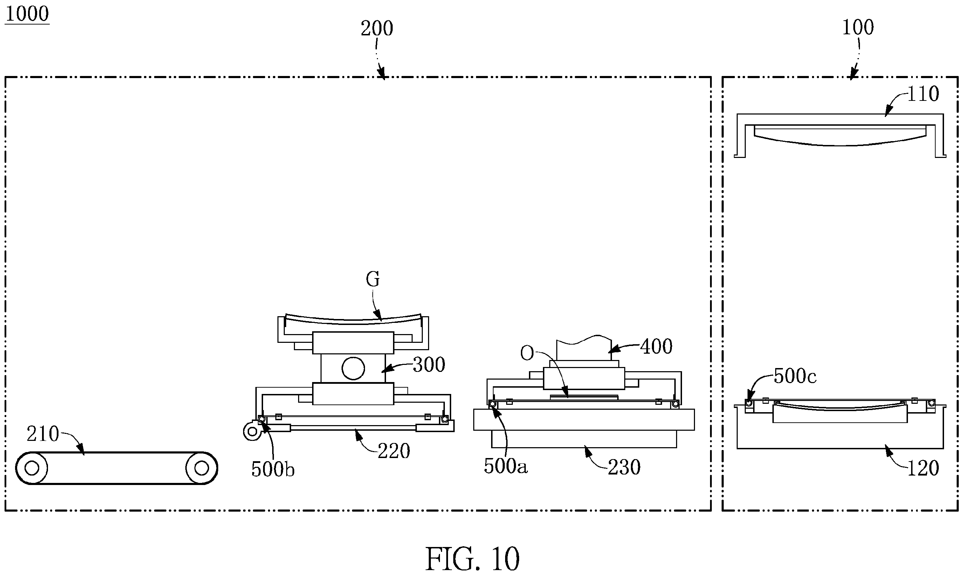

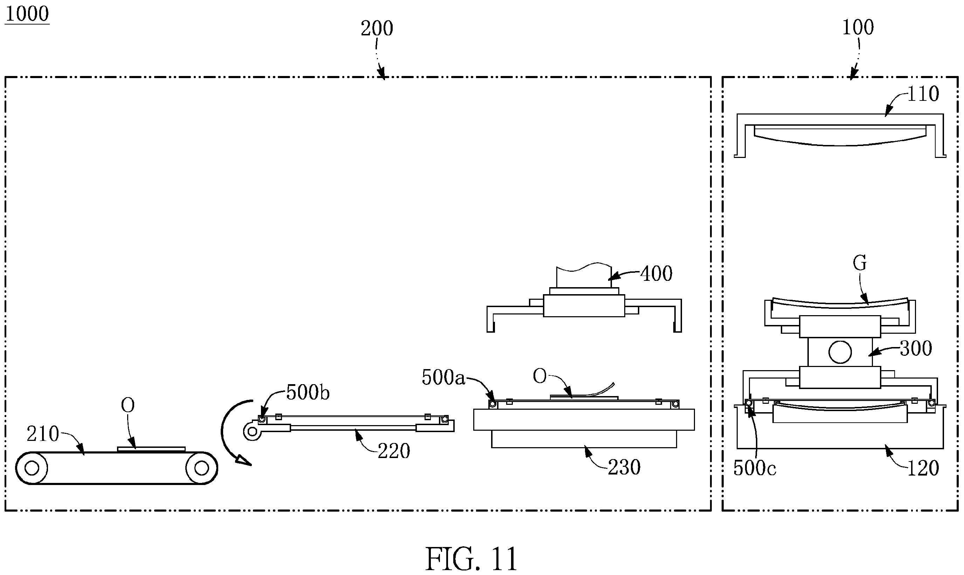

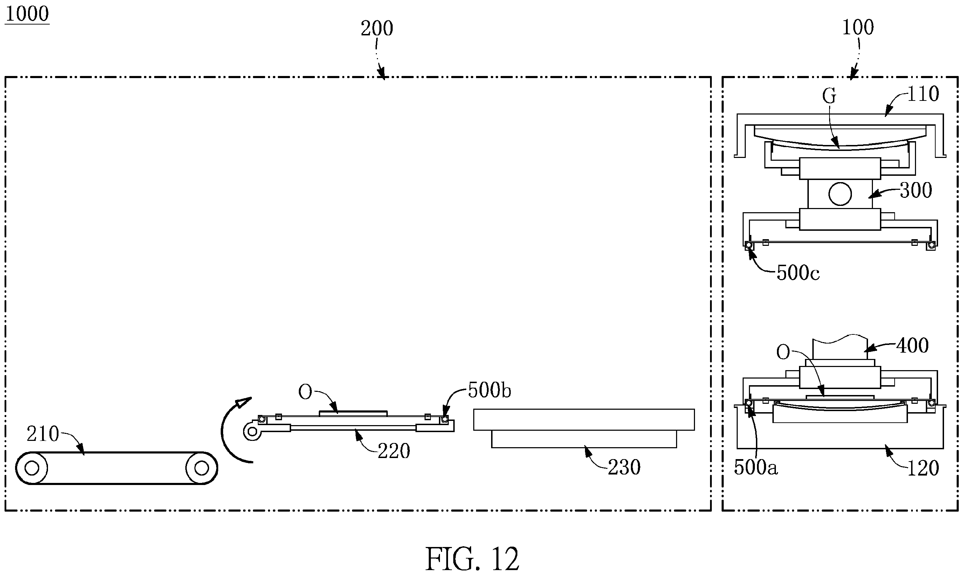

Specifically, as shown in FIG. 9 and FIG. 10, after the lower transferring mechanism 400 transfers one of the attaching intermediaries 500a, 500b, and 500c (e.g., the attaching intermediary 500a) that is located at the pre-attaching platform 220 and that is in the loading mode, the upper transferring mechanism 300 is configured to transfer another one of the attaching intermediaries 500a, 500b, and 500c (e.g., the attaching intermediary 500b), which is located at the lower pressing mechanism 120 and is in the unloading mode, to the pre-attaching platform 220. Moreover, as shown in FIG. 11 and FIG. 12, after the upper transferring mechanism 300 transfers one of the attaching intermediaries 500a, 500b, and 500c (e.g., the attaching intermediary 500c) that is located at the lower pressing mechanism 120 and that is in the unloading mode, the lower transferring mechanism 400 is configured to transfer another one of the attaching intermediaries 500a, 500b, and 500c (e.g., the attaching intermediary 500a), which is in the loading mode, to the lower pressing mechanism 120.

Accordingly, the different components of the attaching apparatus 1000 in the present embodiment can be simultaneously operated by respectively arranging the attaching intermediaries 500a, 500b, and 500c among the different components in the attaching apparatus 1000, thereby effectively increasing the operation efficiency of the attaching apparatus 1000.

### [Third Embodiment]

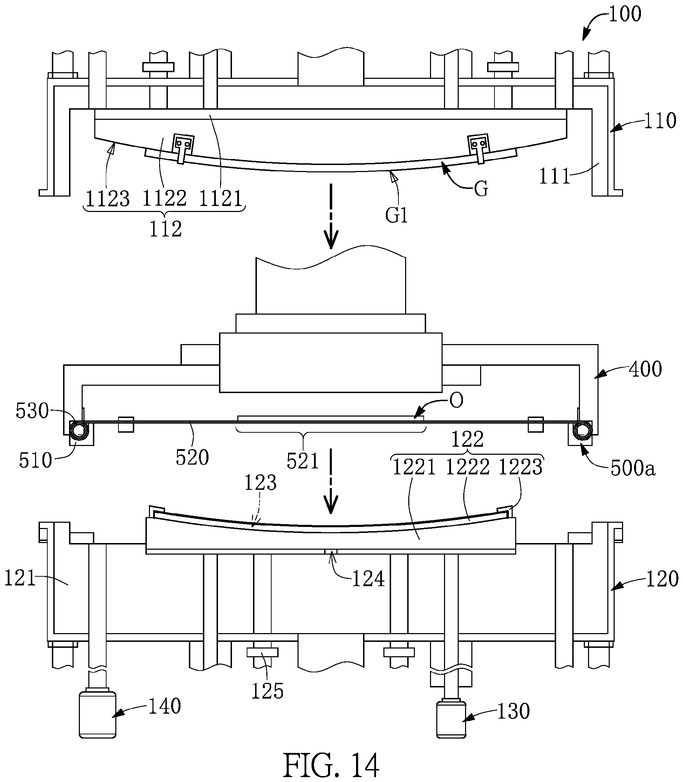

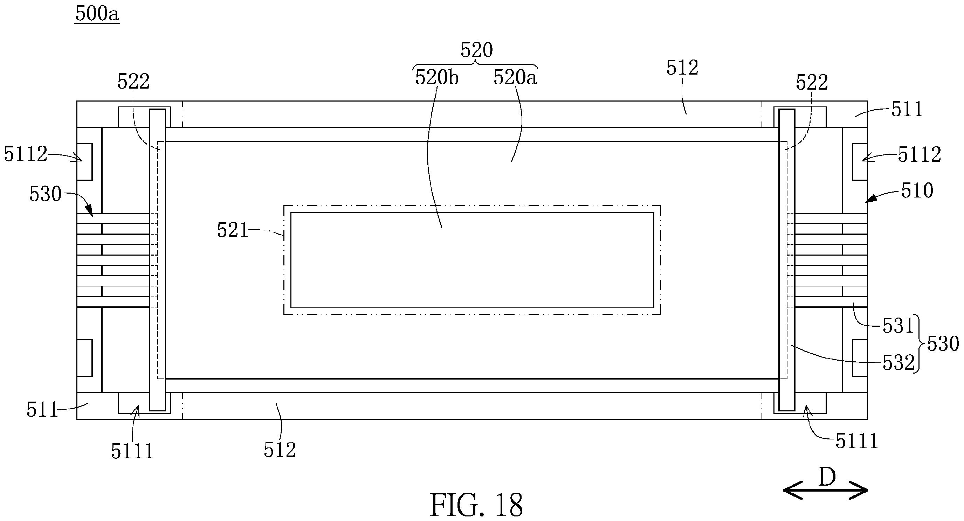

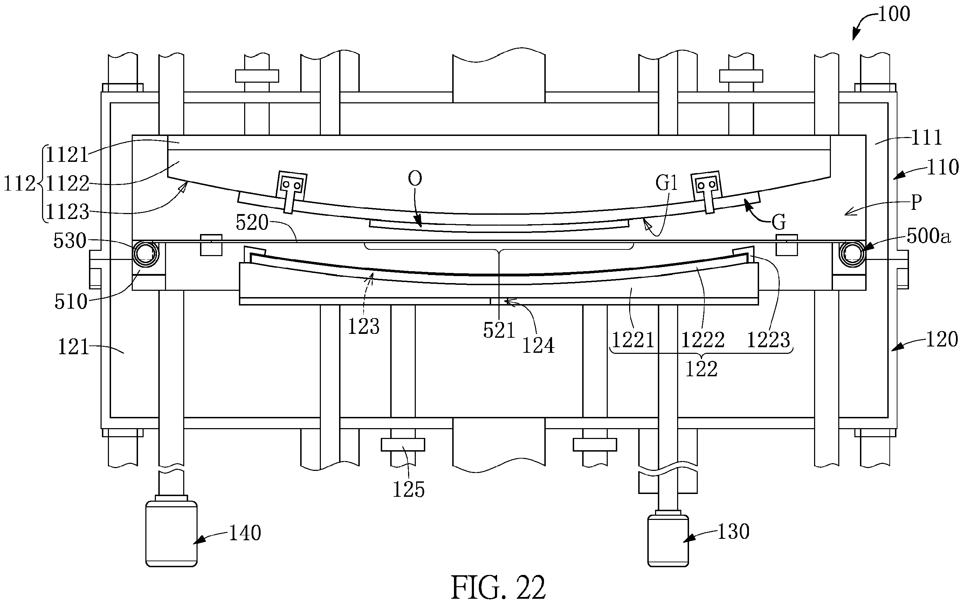

Referring to FIG. 14 to FIG. 22, a third embodiment of the present disclosure is similar to the first and second embodiments of the present disclosure. For the sake of brevity, descriptions of the same components in the first to third embodiments of the present disclosure will be omitted herein, and the following description only discloses different features between the third embodiment and the first and second embodiments.

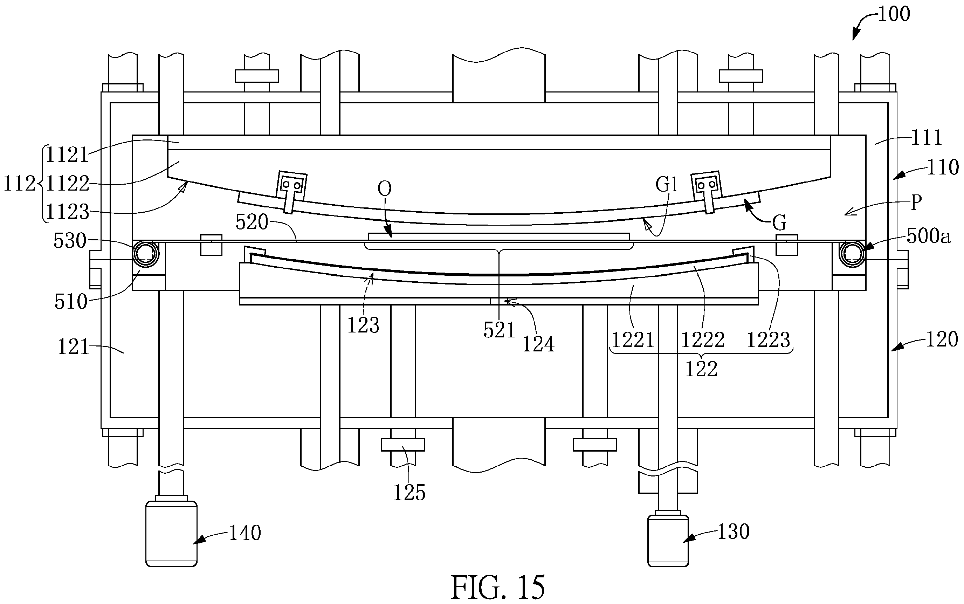

In the present embodiment, as shown in FIG. 14 and FIG. 15, the attached object G has a curved surface G1 that can be adjusted or changed according to design requirements (e.g., a convex surface or a concave surface). Moreover, the attached object G can be a curved glass (e.g., a C-shaped glass or a U-shaped glass), and the attaching object O can be a display, but the present disclosure is not limited thereto.

Specifically, in order to attach the attaching object O of the present embodiment onto the attached object G, the attaching station 100 can be further limited to the following structure and operation. The attaching station 100 includes the upper pressing mechanism 110, the lower pressing mechanism 120 being movable relative to the upper pressing mechanism 110, a filling mechanism 130 connected to the lower pressing mechanism 120, and a suction mechanism 140 that is connected to the upper pressing mechanism 110 and/or the lower pressing mechanism 120.

It should be noted that the attaching station 100 in the present embodiment includes the above components, but the components can be added or omitted according to design requirements. For example, in other embodiments of the present disclosure, at least one of the suction mechanism 140 and the filling mechanism 130 can be omitted; or, the position of the upper pressing mechanism 110 and the position of the lower pressing mechanism 120 can be exchanged. The following description describes the structure and connection relationship of the components of the attaching station 100.

As shown in FIG. 14 and FIG. 15, the upper pressing mechanism 110 includes a first chamber 111 and a carrying platform 112 that is arranged in the first chamber 111. The carrying platform 112 includes a carrying surface 1123 configured to hold the attached object G thereupon (e.g., the attached object G can be fixed on the carrying surface 1123 through the upper transferring mechanism 300 by a vacuum absorption, an adhesive manner, or an engagement manner). Moreover, the carrying surface 1123 can be coated with a lubricating layer for preventing the attached object G from being scratched. In the present embodiment, the carrying surface 1123 is a curved surface corresponding in shape to the attached object G. Specifically, the carrying platform 112 can include a platform 1121 and a mold 1122 that is detachably assembled to the platform 1121, and the mold 1122 is formed with the carrying surface 1123. Accordingly, the mold 1122 can be changed according to the shape of the attached object G.

The lower pressing mechanism 120 in the present embodiment includes a second chamber 121, a pressing member 122 disposed in the second chamber 121, and a lifting assembly 125. The lifting assembly 125 is assembled to the second chamber 121 and is connected to the pressing member 122. The lower pressing mechanism 120 has a filled space 123 and a filling opening 124 that is in spatial communication with the filled space 123. The filled space 123 and the filling opening 124 are arranged in the second chamber 121. Moreover, the filled space 123 of the lower pressing mechanism 120 in the present embodiment is formed of the pressing member 122, but the present disclosure is not limited thereto. For example, in other embodiments of the present disclosure, the filled space 123 can be jointly defined by the pressing member 122 and other components. In other words, the pressing member 122 defines at least part of the filled space 123.

Specifically, the pressing member 122 in the present embodiment includes a seat 1221 fixed to the lifting assembly 125, a bag 1222 disposed on the seat 1221, and a fixing frame 1223 that fixes the bag 1222 onto the seat 1221. An interior space of the bag 1222 is defined as the filled space 123, the seat 1221 is formed with the filling opening 124, and the fixing frame 1223 compresses and fixes a peripheral portion of the bag 1222 onto the seat 1221, so that the bag 1222 (or the filled space 123) can be expanded to a predetermined shape. However, in other embodiments of the present disclosure, the structure of the pressing member 122 can be adjusted or changed according to design requirements.

Moreover, the filling mechanism 130 is arranged outside of the upper pressing mechanism 110 and the lower pressing mechanism 120, and the filling mechanism 130 is connected to the filling opening 124 of the lower pressing mechanism 120. Accordingly, the filling mechanism 130 is configured to selectively fill a fluid (e.g., gas or liquid) into the filled space 123 through the filling opening 124, so that the filled space 123 and/or the pressing member 122 can be gradually expanded. In other words, the lower pressing mechanism 120 can be configured to fill the fluid into the filled space 123 through the filling opening 124 (by the filling mechanism 130), so that the filled space 123 expands to deform the pressing member 122.

Specifically, the lower pressing mechanism 120 and the upper pressing mechanism 110 are movable relative to each other between an open position (as shown in FIG. 14) and a sealed position (as shown in FIG. 15). In other words, at least one of the lower pressing mechanism 120 and the upper pressing mechanism 110 of the attaching apparatus 1000 can be moved according to practical requirements.

As shown in FIG. 14, when the lower pressing mechanism 120 and the upper pressing mechanism 110 are at the open position, the first chamber 111 and the second chamber 121 are spaced apart from each other, so that the attaching intermediary 500a can be selectively moved into or out of a space between the lower pressing mechanism 120 (e.g., the pressing member 122) and the upper pressing mechanism 110 (e.g., the carrying surface 1123). In the present embodiment, the lower transferring mechanism 400 (e.g., a robotic arm, a suction nozzle, or a magnetic attractor) is configured to hold and transfer the attaching intermediary 500a so as to allow the attaching intermediary 500a to be located between or outside of the pressing member 122 and the carrying surface 1123.

As shown in FIG. 15, when the lower pressing mechanism 120 and the upper pressing mechanism 110 are at the sealed position, the first chamber 111 and the second chamber 121 jointly define a work space P, the attaching intermediary 500a is arranged in the work space P, and the pressing member 122 can be moved toward or away from the carrying platform 112 through the lifting assembly 125. The suction mechanism 140 in the present embodiment is connected to the second chamber 121 of the lower pressing mechanism 120, and when the lower pressing mechanism 120 and the upper pressing mechanism 110 are at the sealed position, the suction mechanism 140 is configured to suction away air in the work space P so as to allow the work space P to be in a vacuum state, but the present disclosure is not limited thereto. For example, in other embodiments of the present disclosure, the suction mechanism 140 can be connected to the first chamber 111 of the upper pressing mechanism 110. Accordingly, the suction mechanism 140 in the present embodiment can be connected to the at least one of the lower pressing mechanism 120 and the upper pressing mechanism 110.

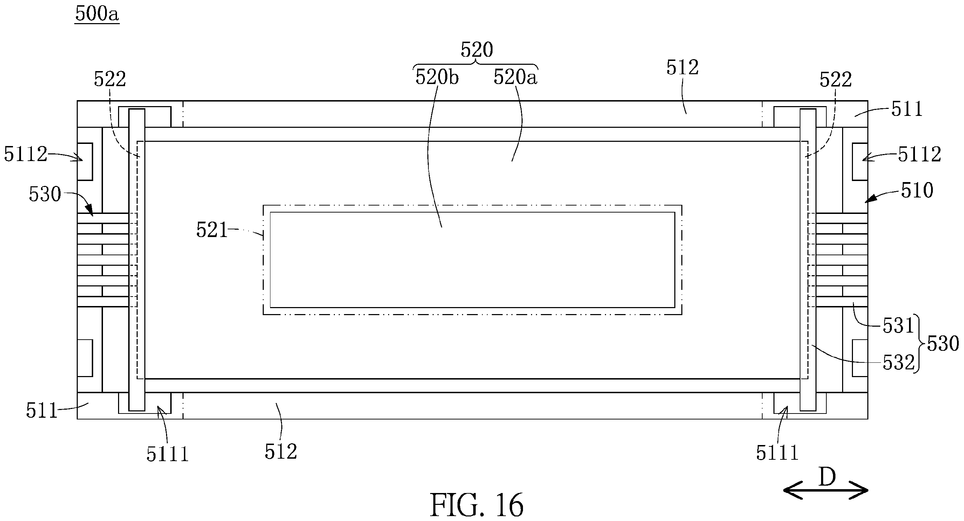

As shown in FIG. 16 to FIG. 19, the attaching intermediary 500a includes a frame 510, two buffering assemblies 530 movably assembled to the frame 510, and a flexible sheet 520 that is assembled to the two buffering assemblies 530. The frame 510 in the present embodiment is in a rectangular shape, and includes two end portions 511 respectively arranged on two opposite ends thereof (e.g., short edge portions of the rectangular shape) and two long lateral portions 512 that are respectively arranged on another two opposite ends thereof (e.g., long edge portions of the rectangular shape). In order to clearly describe the present embodiment, a longitudinal direction of any one of the two long lateral portions 512 is defined as a predetermined direction D. Moreover, each of the two end portions 511 is substantially in a U-shape, and two distal ends of each of the two end portions 511 are respectively connected to the two long lateral portions 512.

Specifically, the frame 510 has a plurality of guiding rails 5111. In the present embodiment, a quantity of the guiding rails 5111 is four, and the four guiding rails 5111 are respectively formed in four corner portions of the frame 510. In other words, each of the two end portions 511 is formed with two of the guiding rails 5111 that are respectively located adjacent to the two long lateral portions 512, and a longitudinal direction of each of the guiding rails 5111 is parallel to the predetermined direction D, but the present disclosure is not limited thereto.

Moreover, the frame 510 has a plurality of catch regions 5112 respectively formed on the two end portions 511, and the catch regions 5112 correspond in structure to the lower transferring mechanism 400, so that the lower transferring mechanism 400 can hold and move the attaching intermediary 500a by holding the catch regions 5112. For example, if the lower transferring mechanism 400 is a robotic arm, the catch regions 5112 are notches for being clamped by the robotic arm; or, if the lower transferring mechanism 400 is a magnetic attractor, the catch regions 5112 are magnetic members for being attracted by the magnetic attractor.

The flexible sheet 520 includes a bonding region 521 and two fixing regions 522 that are respectively located at two opposite sides of the bonding region 521. The flexible sheet 520 in the present embodiment is in a rectangular shape, and the two fixing regions 522 respectively correspond in position to two short edges of the flexible sheet 520 (i.e., the two fixing regions 522 are spaced apart from each other along the predetermined direction D), and the bonding region 521 is arranged on a center portion of the flexible sheet 520 (i.e., the bonding region 521 is spaced apart from each of the two fixing regions 522 by a same distance), but the present disclosure is not limited thereto. For example, in other embodiments of the present disclosure, the bonding region 521 can be arranged close to one of the two fixing regions 522.

Moreover, the two fixing regions 522 of the flexible sheet 520 are respectively fixed to the two buffering assemblies 530, the bonding region 521 is spaced apart from each of the two buffering assemblies 530 by a same distance, and the flexible sheet 520 is preferably spaced apart from the two long lateral portions 512 of the frame 510. As shown in FIG. 15 and FIG. 16, the bonding region 521 is configured to adhere with the attaching object O, and when the attaching intermediary 500a is arranged in the work space P, the bonding region 521 faces toward the carrying surface 1123, so that the attaching object O can face toward the carrying surface 1123 or the attached object G held thereon.

Specifically, as shown in FIG. 16 to FIG. 19, the flexible sheet 520 in the present embodiment is a dual-film structure, which includes a bottom film 520a and a bonding film 520b. The two fixing regions 522 are arranged on the bottom film 520a, the bonding region 521 is arranged on the bonding film 520b, and a coefficient of elasticity of the bonding film 520b is less than that of the bottom film 520a. The bonding film 520b in the present embodiment is stacked onto a center portion of the bottom film 520a, but the present disclosure is not limited thereto. For example, in other embodiments of the present disclosure, the flexible sheet 520 can be a single film structure.

It should be noted that the two buffering assemblies 530 in the present embodiment are of the same structure and are in a symmetrical arrangement with respect to the frame 510, but the present disclosure is not limited thereto. For example, in other embodiments of the present disclosure, the two buffering assemblies 530 can be of different structure.

Any one of the two buffering assemblies 530 includes an elastic member 531 and a positioning member 532 that is movably disposed on the frame 510. In the present embodiment, the elastic member 531 is a spring, and the positioning member 532 is a rod, but the present disclosure is not limited thereto. For example, in other embodiments of the present disclosure, the elastic member 531 can also be a component with a resilient material (e.g., rubber); or, the elastic member 531 and the positioning member 532 can be integrally formed as a single one-piece structure.

Specifically, one end of the two elastic members 531 is fixed to the frame 510 (e.g., the two end portions 511), and another end of the two elastic members 531 is fixed to the two positioning members 532. Moreover, the positioning members 532 of the two buffering assemblies 530 are movably disposed on the guiding rails 5111, and the two fixing regions 522 are respectively fixed to the positioning members 532 of the two buffering assemblies 530, so that the two positioning members 532 are elastically movable along the guiding rails 5111 relative to the frame 510 through the two elastic members 531, but the present disclosure is not limited thereto. For example, in other embodiments of the present disclosure, the guiding rails 5111 of the frame 510 can be omitted, the positioning member 532 of any one of the two buffering assemblies 530 can be omitted, and any one of the two elastic members 531 is directly fixed to one of the two fixing regions 522.

In addition, the attaching intermediary 500a can be held by the at least one of the lower pressing mechanism 120 and the upper pressing mechanism 110 through the frame 510, but the connection structure between the attaching intermediary 500a and the at least one of the lower pressing mechanism 120 and the upper pressing mechanism 110 can be adjusted or changed according to design requirements and is not limited to the present embodiment.

As shown in FIG. 15 and FIG. 20 to FIG. 22, when the attaching station 100 is operated to implement the attaching process after the attached object G is held by the carrying surface 1123 and the attaching object O is adhered to the flexible sheet 520, the curved surface G1 of the attached object G and the pressing member 122 that is deformed by the filled space 123 jointly clamp and press a the flexible sheet 520 and the attaching object O, so that the attaching object O is deformed and adhered onto the curved surface G1 of the attached object G. It should be noted that the attaching process in the present embodiment can be implemented by selecting one of the following two manners according to practical requirements.

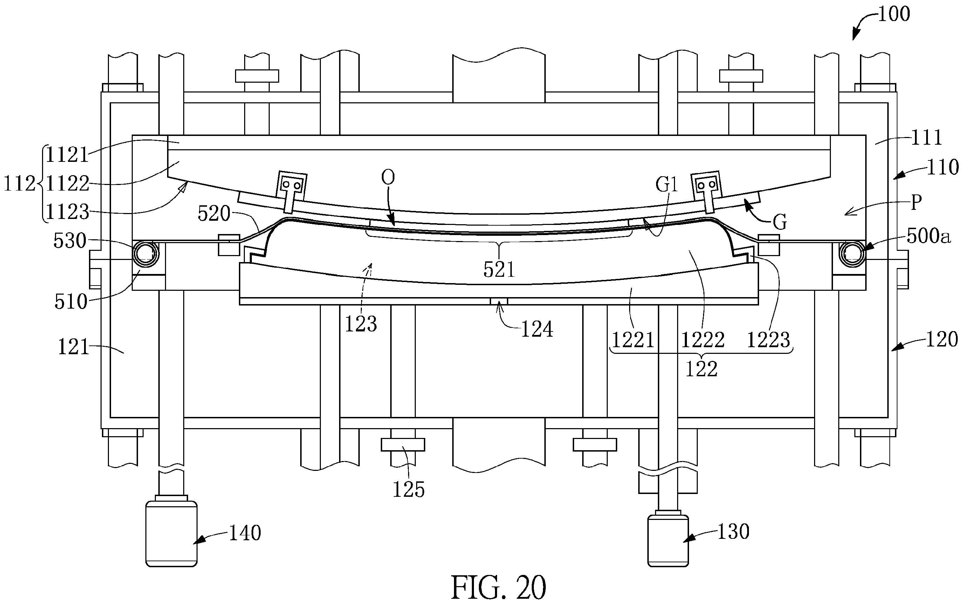

As shown in FIG. 20, when the attaching process is implemented in a first manner, the lower pressing mechanism 120 is configured to gradually expand the filled space 123 toward the flexible sheet 520 so as to allow the pressing member 122 to gradually press against the flexible sheet 520, thereby gradually deforming the flexible sheet 520 toward the carrying surface 1123 to deform and adhere the attaching object O onto the curved surface G1 of the attached object G.

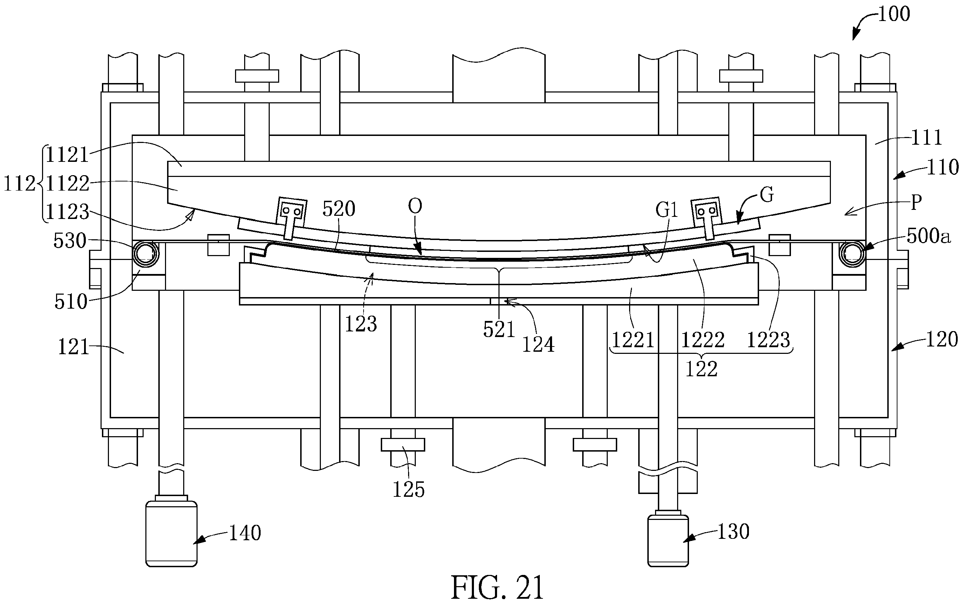

As shown in FIG. 21, when the attaching process is implemented in a second manner, the upper pressing mechanism 110 is configured to allow the attached object G held by the carrying surface 1123 to be moved toward and abutted against the flexible sheet 520 (by using a component that can lift the carrying platform 112) so as to cause the attaching object O and the flexible sheet 520 to gradually press against the pressing member 122 that is deformed by the filled space 123, thereby deforming and adhering the attaching object O onto the curved surface G1 of the attached object G.

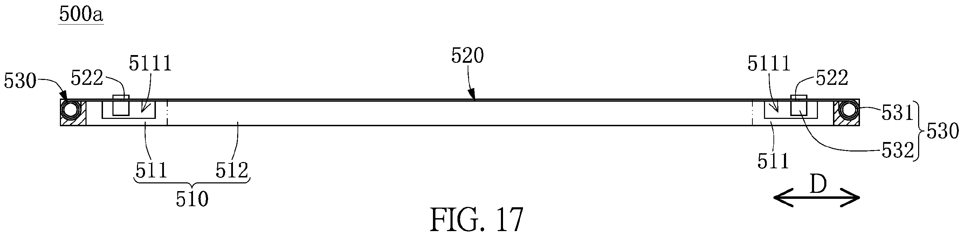

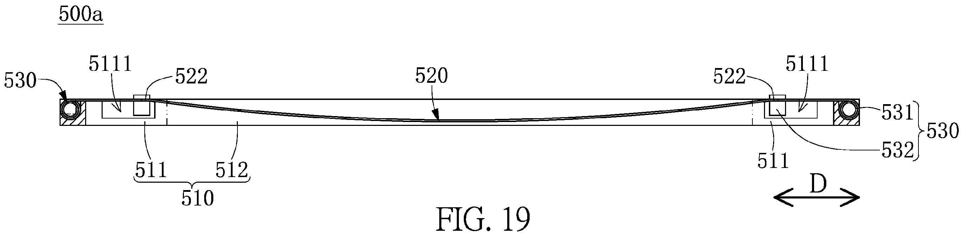

Specifically, when the flexible sheet 520 is compressed to increase a tension value thereof to reach a predetermined starting value, the two fixing regions 522 are moved toward the bonding region 521 by a same amount of displacement through the two buffering assemblies 530 (as shown in FIG. 17 and FIG. 19). Moreover, the predetermined starting value is less than a tension threshold value where the flexible sheet 520 (e.g., the bottom film 520a) ruptures or is elastically fatigued. In the present embodiment, when the flexible sheet 520 is compressed to increase the tension value thereof to reach the predetermined starting value, the positioning members 532 of the two buffering assemblies 530 are moved along the guiding rails 5111 relative to the frame 510 by the same amount of displacement.

Accordingly, any one of the two fixing regions 522 of the flexible sheet 520 can be moved by the amount of displacement, thereby avoiding damaging the flexible sheet 520 when the flexible sheet 520 is stretched beyond the tension value of the tension threshold value. The two fixing regions 522 of the flexible sheet 520 can be moved by the same amount of displacement, so that the attaching object O adhered to the bonding region 521 can be adhered onto the attached object G without a position offset for achieving a precisely attaching effect.

Moreover, the coefficient of elasticity of the bonding film 520b in the flexible sheet 520 is less than that of the bottom film 520a, so that when the bottom film 520a is stretched and deformed, the attaching object O adhered to the bonding film 520b can be less affected by the stretched bottom film 520a for effectively increasing the stability and accuracy of the attaching process.

### [Fourth Embodiment]

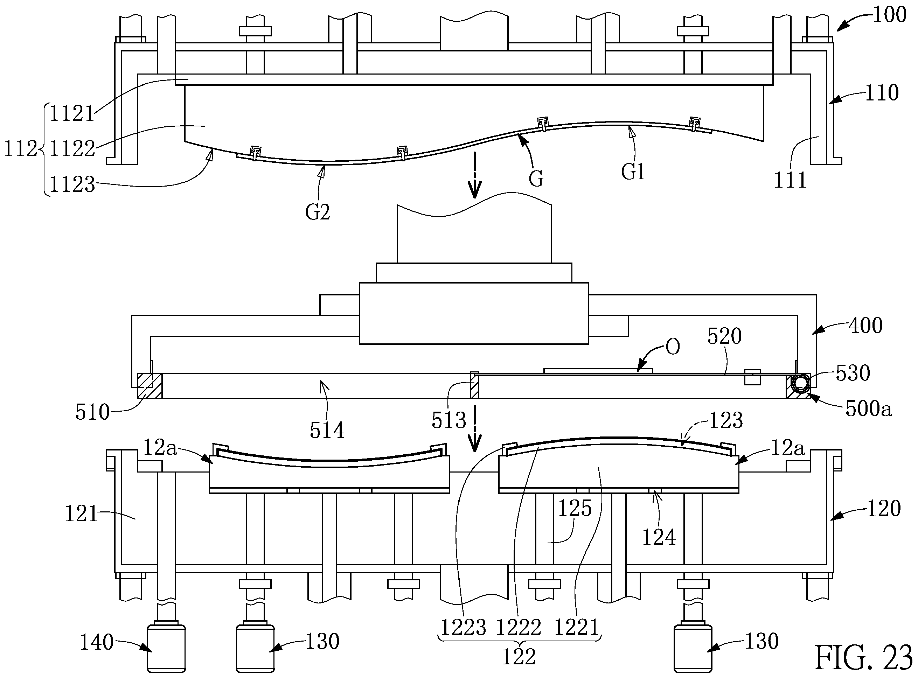

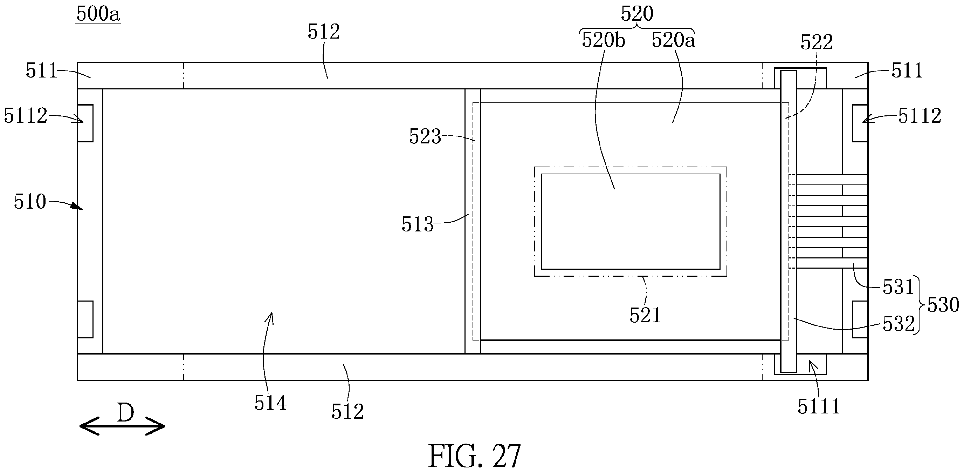

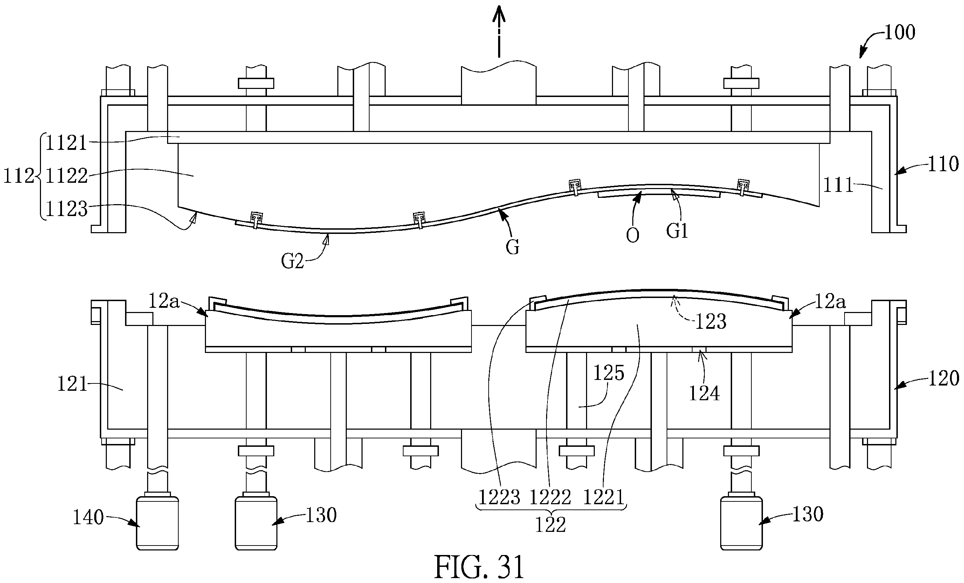

Referring to FIG. 23 to FIG. 32, a fourth embodiment of the present disclosure is similar to the third embodiments of the present disclosure. For the sake of brevity, descriptions of the same components in the third and fourth embodiments of the present disclosure will be omitted herein, and the following description only discloses different features between the third and fourth embodiments.

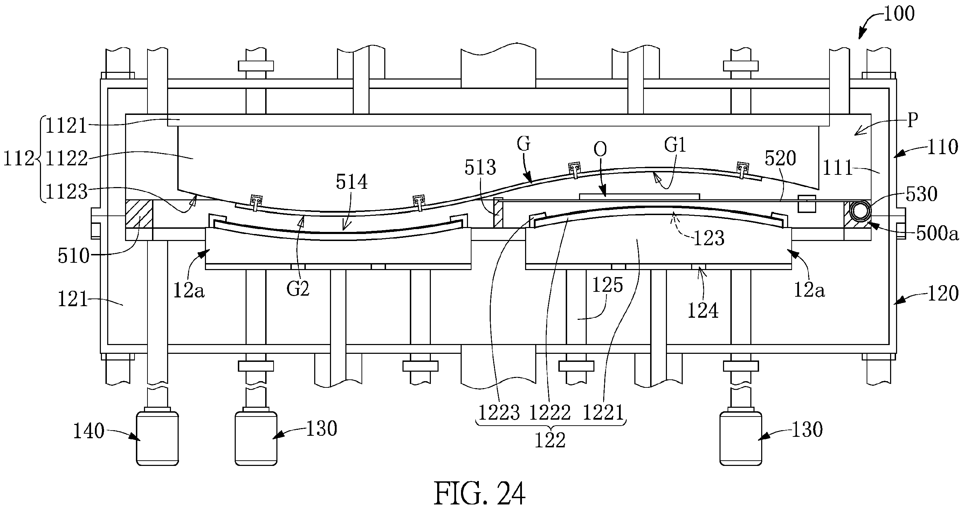

In the present embodiment, as shown in FIG. 23 and FIG. 24, the attached object G has a first curved surface G1 and a second curved surface G2, which have different centers of curvature, and the first curved surface G1 and the second curved surface G2 can be adjusted or changed according to design requirements (e.g., the first curved surface G1 and the second curved surface G2 can be a convex surface and a concave surface). In the present embodiment, the attached object G can be a curved glass (e.g., an S-shaped glass), and the attaching object O can be a display, but the present disclosure is not limited thereto.

Specifically, in order to attach the attaching object O of the present embodiment onto the attached object G, the attaching station 100 can be further limited to the following structure and operation. Moreover, the different features between the third and fourth embodiments are related to the lower pressing mechanism 120 and the attaching intermediary 500a.

As shown in FIG. 23 and FIG. 24, the lower pressing mechanism 120 in the present embodiment includes a second chamber 121 and two pressing modules 12a that are disposed in the second chamber 121. The two pressing modules 12a are independently operable for respectively facing toward the first curved surface G1 and the second curved surface G2. Moreover, each of the two pressing modules 12a has a pressing member 122 disposed in the second chamber 121 and a lifting assembly 125. In each of the two pressing modules 12a, the lifting assembly 125 is assembled to the second chamber 121 and is connected to the pressing member 122.

Specifically, each of the two pressing modules 12a has a filled space 123 and a filling opening 124 that is in spatial communication with the filled space 123. The filled space 123 and the filling opening 124 are arranged in the second chamber 121. Moreover, the filled space 123 of each of the two pressing modules 12a in the present embodiment is formed in the pressing member 122, but the present disclosure is not limited thereto. For example, in other embodiments of the present disclosure, the filled space 123 can be jointly defined by the pressing member 122 and other components. In other words, the pressing member 122 defines at least part of the filled space 123. Moreover, the structure of the pressing member 122 of the present embodiment is substantially identical to that of the third embodiment, and is not described in the following description for the sake of brevity.

In addition, the operations of the two pressing modules 12a are substantially the same, but the seats 1221 of the two pressing modules 12a are of different structure. In the present embodiment, curvatures of outer surfaces of the two seats 1221 respectively correspond (e.g., equal) to curvatures of the first curved surface G1 and the second curved surface G2, but the present disclosure is not limited thereto.

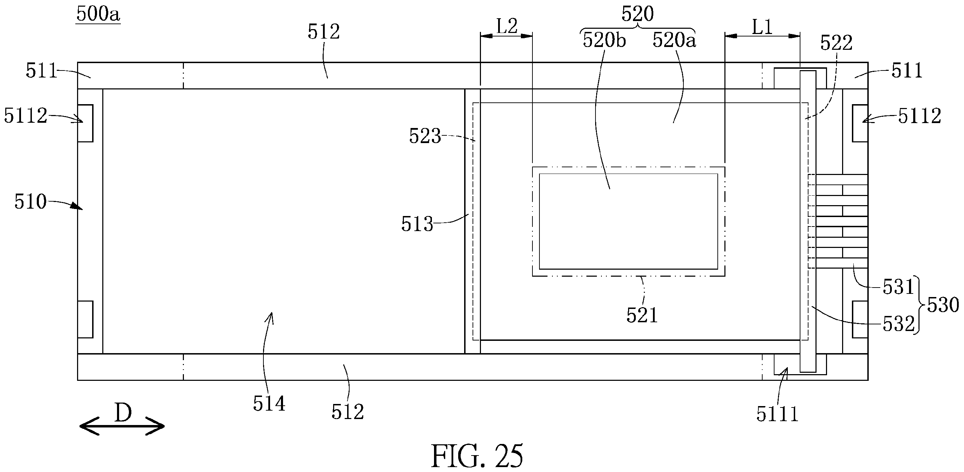

As shown in FIG. 25 to FIG. 28, the attaching intermediary 500a includes a frame 510, a buffering assembly 530 movably assembled to the frame 510, and a flexible sheet 520 that is assembled to the buffering assembly 530 and the frame 510. The frame 510 in the present embodiment is in a rectangular shape, and includes two end portions 511 respectively arranged on two opposite ends thereof (e.g., short edge portions of the rectangular shape), a fixing portion 513 disposed between the two end portions 511, and two long lateral portions 512 that are respectively arranged on another two opposite ends thereof (e.g., long edge portions of the rectangular shape). In order to clearly describe the present embodiment, a longitudinal direction of any one of the two long lateral portions 512 is defined as a predetermined direction D. Moreover, each of the two end portions 511 is substantially in a U-shape, two distal ends of each of the two end portions 511 are respectively connected to the two long lateral portions 512, and the fixing portion 513 is connected to a substantial center portion of each of the two long lateral portions 512.

Specifically, the frame 510 has a plurality of guiding rails 5111. In the present embodiment, a quantity of the guiding rails 5111 is two, and the two guiding rails 5111 are respectively formed in two corner portions of the frame 510. In other words, one of the two end portions 511 is formed with the two guiding rails 5111 that are respectively located adjacent to the two long lateral portions 512, and a longitudinal direction of each of the guiding rails 5111 is parallel to the predetermined direction D, but the present disclosure is not limited thereto.

Moreover, the frame 510 has a plurality of catch regions 5112 respectively formed on the two end portions 511, and the catch regions 5112 correspond in structure to the lower transferring mechanism 400, so that the lower transferring mechanism 400 can hold and move the attaching intermediary 500a by holding the catch regions 5112. For example, if the lower transferring mechanism 400 is a robotic arm, the catch regions 5112 are notches for being clamped by the robotic arm; or, if the lower transferring mechanism 400 is a magnetic attractor, the catch regions 5112 are magnetic members for being attracted by the magnetic attractor.

The flexible sheet 520 includes a bonding region 521, a first fixing region 522, and a second fixing region 523, the latter two of which are respectively located at two opposite sides of the bonding region 521. The flexible sheet 520 in the present embodiment is in a rectangular shape, and the first fixing region 522 and the second fixing region 523 respectively correspond in position to two short edges of the flexible sheet 520 (i.e., the first fixing region 522 and the second fixing region 523 are spaced apart from each other along the predetermined direction D), and the bonding region 521 is arranged on a portion of the flexible sheet 520 adjacent to the second fixing region 523 (i.e., a distance between the bonding region 521 and the first fixing region 522 is different from a distance between the bonding region 521 and the second fixing region 523), but the present disclosure is not limited thereto. For example, in other embodiments of the present disclosure, the bonding region 521 can be arranged on a portion of the flexible sheet 52 adjacent to the first fixing region 522.

Moreover, the first fixing region 522 of the flexible sheet 520 is fixed to the buffering assembly 530, and the second fixing region 523 is fixed to the fixing portion 513 of the frame 510. The bonding region 521 is spaced apart from the buffering assembly 530 along the predetermined direction D by a first distance L1, the bonding region 521 is spaced apart from the fixing portion 513 along the predetermined direction D by a second distance L2 different from the first distance LI, and the flexible sheet 520 is preferably spaced apart from the two long lateral portions 512 of the frame 510. The bonding region 521 is configured to adhere with the attaching object O, and when the attaching intermediary 500a is arranged in the work space P, the bonding region 521 faces toward the carrying surface 1123, so that the attaching object O can face toward the carrying surface 1123 or the attached object G held thereon.

Specifically, the flexible sheet 520 in the present embodiment is a dual-film structure, which includes a bottom film 520a and a bonding film 520b. The first fixing region 522 and the second fixing region 523 are arranged on the bottom film 520a, the bonding region 521 is arranged on the bonding film 520b, and a coefficient of elasticity of the bonding film 520b is less than that of the bottom film 520a. The bonding film 520b in the present embodiment is stacked onto the bottom film 520a, but the present disclosure is not limited thereto. For example, in other embodiments of the present disclosure, the flexible sheet 520 can be a single film structure.

The buffering assembly 530 includes an elastic member 531 and a positioning member 532 that is movably disposed on the frame 510. In the present embodiment, the elastic member 531 is a spring, and the positioning member 532 is a rod, but the present disclosure is not limited thereto. For example, in other embodiments of the present disclosure, the elastic member 531 can be a component (e.g., a rubber) having a resilient material; or, the elastic member 531 and the positioning member 532 can be integrally formed as a single one-piece structure.

Specifically, one end of the elastic member 531 is fixed to the frame 510 (e.g., the buffering assembly 530 is movably assembled to one of the two end portions 511), and another end of the elastic member 531 is fixed to the positioning member 532. Moreover, the positioning member 532 is movably disposed on the guiding rails 5111, the first fixing region 522 is fixed to the positioning member 532, and the second fixing region 523 is fixed to the fixing portion 513, so that the positioning member 532 is elastically movable along the guiding rails 5111 relative to the frame 510 through the elastic member 531, but the present disclosure is not limited thereto. For example, in other embodiments of the present disclosure, the guiding rails 5111 of the frame 510 can be omitted, the positioning member 532 of the buffering assembly 530 can also be omitted, and the elastic member 531 is directly fixed to the first fixing region 522.

In addition, the attaching intermediary 500a has a thru-hole 514 arranged between the fixing portion 513 and another one of the two end portions 511. In other words, the flexible sheet 520 and the thru-hole 514 are respectively located at two opposite sides of the fixing portion 513, and are respectively aligned to face the first curved surface G1 and the second curved surface G2 of the attached object G. Moreover, the attaching intermediary 500a can be held by the at least one of the lower pressing mechanism 120 and the upper pressing mechanism 110 through the frame 510, but the connection structure between the attaching intermediary 500a and the at least one of the lower pressing mechanism 120 and the upper pressing mechanism 110 can be adjusted or changed according to design requirements and is not limited to the present embodiment.

As shown in FIG. 24 and FIG. 29 to FIG. 31, when the attaching station 100 is operated to implement the attaching process after the attached object G is held by the carrying surface 1123 and the attaching object O is adhered to the flexible sheet 520 and faces toward the first curved surface G1, the first curved surface G1 of the attached object G and the pressing member 122 that faces toward the first curved surface G1 and that is deformed by the filled space 123 jointly clamp and press against the flexible sheet 520 and the attaching object O, so that the attaching object O is deformed and adhered onto the first curved surface G1 of the attached object G. Furthermore, in the attaching process, the thru-hole 514 of the attaching intermediary 500a is configured to provide insertion of the second curved surface G2 (e.g., a convex surface) of the attached object G. It should be noted that the attaching process in the present embodiment can be implemented by selecting one of the following two manners according to practical requirements.

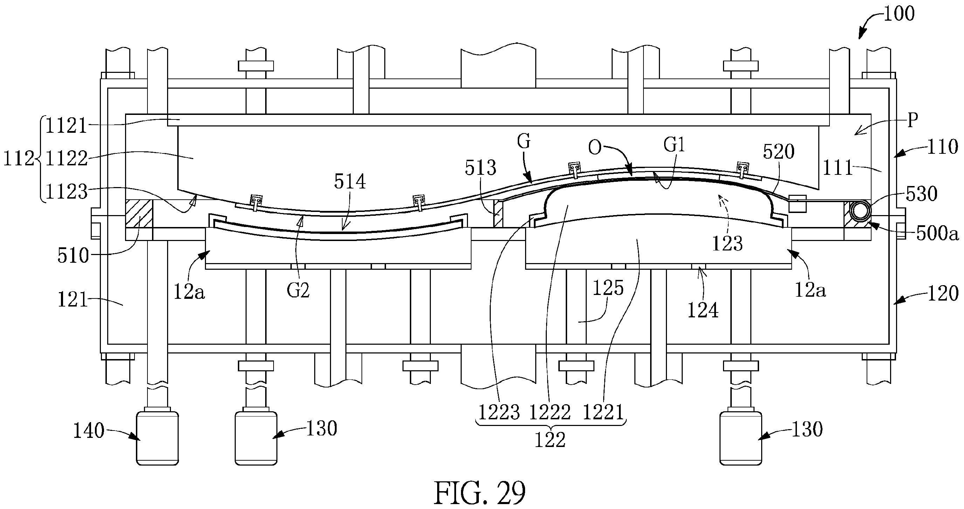

As shown in FIG. 29, when the attaching process is implemented in a first manner, the corresponding pressing module 12a facing toward the first curved surface G1 is configured to gradually expand the filled space 123 toward the flexible sheet 520 so as to allow the pressing member 122 to gradually press against the flexible sheet 520, thereby gradually deforming the flexible sheet 520 toward the carrying surface 1123 to deform and adhere the attaching object O onto the first curved surface G1 of the attached object G.

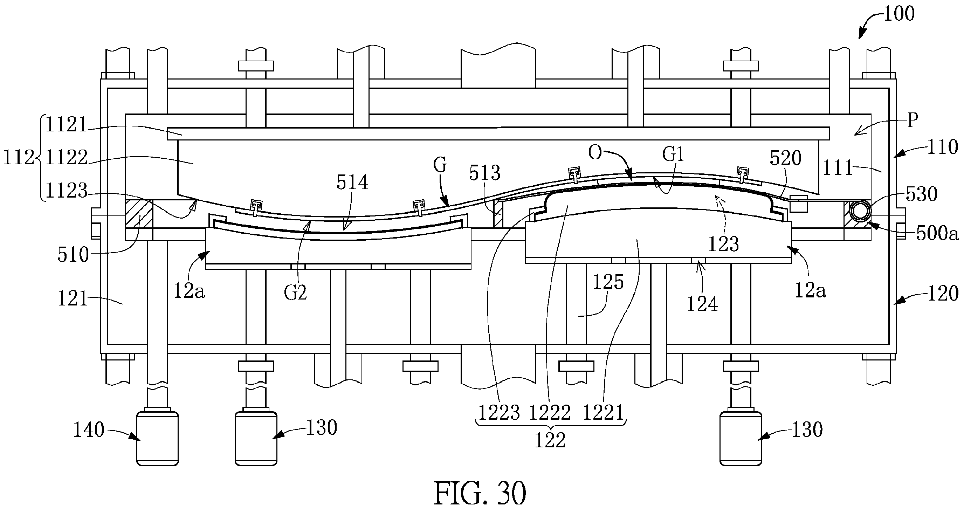

As shown in FIG. 30, when the attaching process is implemented in a second manner, the upper pressing mechanism 110 is configured to allow the attached object G held by the carrying surface 1123 to move toward and abut against the flexible sheet 520 (by using a component that can lift the carrying platform 112) so as to cause the attaching object O and the flexible sheet 520 to gradually press against the pressing member 122 that faces toward the first curved surface G1 and that is deformed by the filled space 123, thereby deforming and adhering the attaching object O onto the first curved surface G1 of the attached object G.

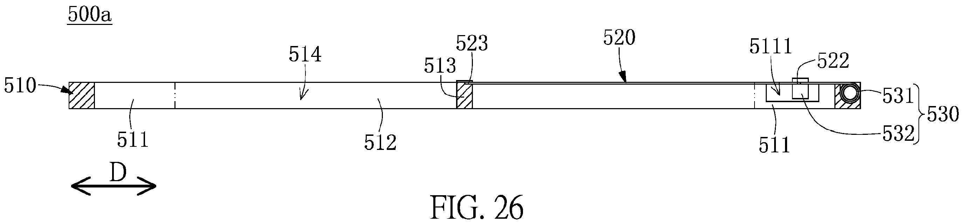

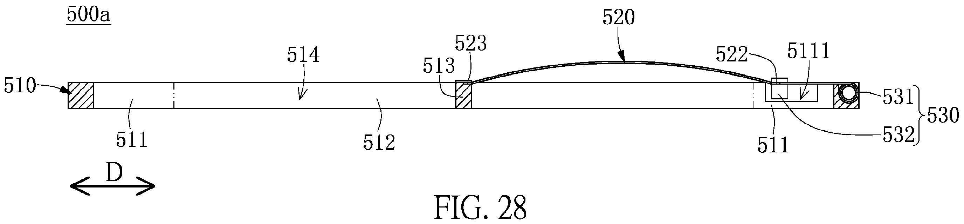

Specifically, as shown in FIG. 26 and FIG. 28, when the flexible sheet 520 is compressed to increase a tension value thereof to reach a predetermined starting value, the first fixing region 522 is moved toward the bonding region 521 by an amount of displacement through the buffering assembly 530. Moreover, the predetermined starting value is less than a tension threshold value where the flexible sheet 520 (e.g., the bottom film 520a) ruptures or is elastically fatigued. In the present embodiment, when the flexible sheet 520 is compressed to increase the tension value thereof to reach the predetermined starting value, the positioning member 532 is moved along the guiding rails 5111 relative to the frame 510 by the amount of displacement.

Accordingly, the first fixing region 522 of the flexible sheet 520 can be moved by the amount of displacement, thereby avoiding damaging the flexible sheet 520 when the flexible sheet 520 is stretched beyond the tension value of the tension threshold value. Before the attaching process, the amount of displacement of the first fixing region 522 of the flexible sheet 520 can be pre-calculated, so that the bonding region 521 or the attaching object O adhered thereon can be provided by offsetting the amount of displacement with respect to a predetermined position of the attached object G. Accordingly, the attaching object O can be precisely attached onto the predetermined position of the first curved surface G1 of the attached object G.

Moreover, the coefficient of elasticity of the bonding film 520b in the flexible sheet 520 is less than that of the bottom film 520a, so that when the bottom film 520a is stretched and deformed, the attaching object O adhered to the bonding film 520b can be less affected by the stretched bottom film 520a for effectively increasing the stability and accuracy of the attaching process.

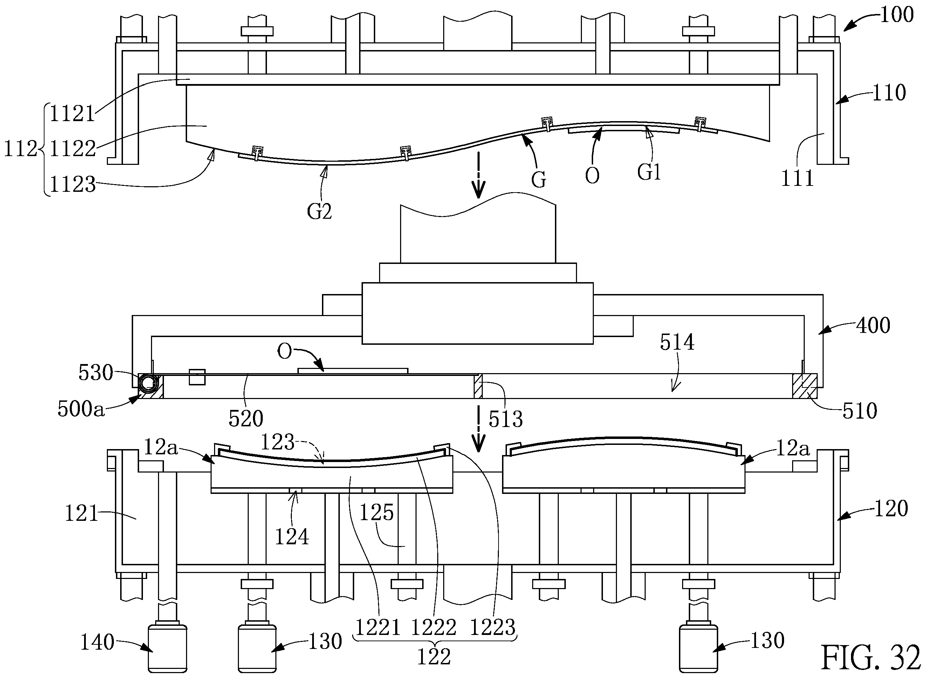

In addition, if the second curved surface G2 of the attached object G has an attaching requirement (as shown in FIG. 32), after the above attaching process is implemented by the attaching apparatus 1000 (e.g., the attaching station 100), the attaching station 100 can further be used to implement an additional attaching process. The operation of the additional attaching process is similar to the operation of the attaching process. Specifically, in the additional attaching process, an additional attaching object O is adhered onto the flexible sheet 520 and faces toward the second curved surface G2 by rotating the attaching intermediary 500a at 180 degrees, and the additional attaching object O can be deformed and adhered to the second curved surface G2 of the attached object G by the attaching station 100.

Accordingly, the attaching apparatus 1000 can be used to implement the attaching process and/or the additional attaching process through a structural design thereof, thereby satisfying the different attaching requirements of the attached object G. For example, the attached object G may only have an attaching requirement for the first curved surface G1; or, the attached object G may have an attaching requirement for the first curved surface G1 and the second curved surface G2.

### [Beneficial Effects of the Embodiments]

In conclusion, the components of the attaching apparatus in the present disclosure can be efficiently designed to allow the attaching intermediary to be repeatedly operated in the attaching apparatus, so that the attaching apparatus can be provided without any external circulation mechanism for carrying or transferring the attaching intermediary. Accordingly, the operation efficiency of the attaching apparatus can be effectively increased, and the volume of the attaching apparatus can be reduced.

In the present disclosure, a quantity of the attaching intermediary of the attaching apparatus can be more than one. The attaching intermediaries are respectively arranged among different components in the attaching apparatus, so that the different components in the attaching apparatus corresponding in position to the attaching intermediaries can be simultaneously operated for effectively increasing the operation efficiency of the attaching apparatus.

In the attaching apparatus of the third embodiment of the present disclosure, any one of the two fixing regions of the flexible sheet can be moved by the amount of displacement, thereby avoiding damaging the flexible sheet when the flexible sheet is stretched beyond the tension value of the tension threshold value. Moreover, the two fixing regions of the flexible sheet can be moved by the same amount of displacement, so that the attaching object adhered to the bonding region can be adhered onto the attached object without a position offset for achieving a precisely attaching effect.

In the attaching apparatus of the fourth embodiment of the present disclosure, the first fixing region of the flexible sheet can be moved by the amount of displacement, thereby avoiding damaging the flexible sheet when the flexible sheet is stretched beyond the tension value of the tension threshold value. Before the attaching process, the amount of displacement of the first fixing region of the flexible sheet can be pre-calculated, so that the bonding region or the attaching object adhered thereon can be provided by offsetting the amount of displacement with respect to a predetermined position of the attached object. Accordingly, the attaching object can be precisely attached onto the predetermined position of the first curved surface of the attached object.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its scope.

## Claims

1. An attaching apparatus (1000) with an internal circulation mechanism, **characterized by** comprising: a preparing station (200), an attaching station (100), an upper transferring mechanism (300), a lower transferring mechanism (400), and an attaching intermediary (500a), wherein any one of the upper transferring mechanism (300) and the lower transferring mechanism (400) is movable between the preparing station (200) and the attaching station (100), and the attaching intermediary (500a) is selectively in a loading mode or an unloading mode;
wherein the preparing station (200) includes:
a feeding platform (210) configured to receive an attaching object (O); and
a pre-attaching platform (220) configured to receive the attaching intermediary (500a) that is in the unloading mode and that is transferred from the upper transferring mechanism (300), wherein the feeding platform (210) and the pre-attaching platform (220) are configured to attach the attaching object (O) located at the feeding platform (210) onto the attaching intermediary (500a) that is in the unloading mode and that is located at the pre-attaching platform (220) by being movable relative to each other, so that the attaching intermediary (500a) is in the loading mode;
wherein the attaching station (100) includes:
an upper pressing mechanism (110) configured to hold an attached object (G); and
a lower pressing mechanism (120) configured to receive the attaching intermediary (500a) that is in the loading mode and that is transferred from the lower transferring mechanism (400), wherein the upper pressing mechanism (110) and the lower pressing mechanism (120) are configured to implement an attaching process by moving relative to each other so as to attach the attaching object (O) located at the lower pressing mechanism (120) onto the attached object (G) held by the upper pressing mechanism (110), so that the attaching intermediary (500a) is in the unloading mode;
wherein the upper transferring mechanism (300) is configured to transfer the attaching intermediary (500a), which is located at the lower pressing mechanism (120) and is in the unloading mode, to the pre-attaching platform (220).

2. The attaching apparatus (1000) according to claim 1, wherein a quantity of the attaching intermediary (500a) of the attaching apparatus (1000) is more than one, and wherein, after the lower transferring mechanism (400) transfers one of the attaching intermediaries (500a, 500b, 500c) that is located at the pre-attaching platform (220) and that is in the loading mode, the upper transferring mechanism (300) is configured to transfer another one of the attaching intermediaries (500a, 500b, 500c), which is located at the lower pressing mechanism (120) and is in the unloading mode, to the pre-attaching platform (220).

3. The attaching apparatus (1000) according to claim 1, wherein a quantity of the attaching intermediary (500a) of the attaching apparatus (1000) is more than one, and wherein, after the upper transferring mechanism (300) transfers one of the attaching intermediaries (500a, 500b, 500c) that is located at the lower pressing mechanism (120) and that is in the unloading mode, the lower transferring mechanism (400) is configured to transfer another one of the attaching intermediaries (500a, 500b, 500c), which is in the loading mode, to the lower pressing mechanism (120).

4. The attaching apparatus (1000) according to claim 1, wherein the preparing station (200) further includes a tearing platform (230), and wherein, before the lower pressing mechanism (120) receives the attaching intermediary (500a) that is in the loading mode and that is transferred from the lower transferring mechanism (400), the lower transferring mechanism (400) is configured to transfer the attaching intermediary (500a), which is in the loading mode and is located at the pre-attaching platform (220), to the tearing platform (230), so that the tearing platform (230) is configured to tear off a release film adhered to the attaching object (O) for allowing the lower transferring mechanism (400) to transfer the attaching intermediary (500a) from the tearing platform (230) to the lower pressing mechanism (120).

5. The attaching apparatus (1000) according to claim 1, wherein the attaching intermediary (500a) is configured to only move between the preparing station (200) and the attaching station (100) through the upper transferring mechanism (300) or the lower transferring mechanism (400).

6. The attaching apparatus (1000) according to claim 1, wherein, when the upper transferring mechanism (300) is moved to the attaching station (100), the upper transferring mechanism (300) is configured to transfer the attaching intermediary (500a) that is in the unloading mode and that is located at the lower pressing mechanism (120), and then the upper transferring mechanism (300) is configured to transfer another attached object (G) to the upper pressing mechanism (110).

7. The attaching apparatus (1000) according to claim 1, wherein the upper pressing mechanism (110) includes a carrying surface (1123) configured to hold the attached object (G), wherein the lower pressing mechanism (120) has a filled space (123), a filling opening (124) being in spatial communication with the filled space (123), and a pressing member (122) that defines at least part of the filled space (123), wherein the lower pressing mechanism (120) is configured to fill a fluid into the filled space (123) through the filling opening (124), so that the filled space (123) expands to deform the pressing member (122), wherein the attaching intermediary (500a) includes a frame (510), two buffering assemblies (530) movably assembled to the frame (510), and a flexible sheet (520), wherein the flexible sheet (520) includes a bonding region (521) and two fixing regions (522) that are respectively located at two opposite sides of the bonding region (521), wherein the bonding region (521) is configured to adhere with the attaching object (O), and the two fixing regions (522) are respectively fixed to the two buffering assemblies (530), wherein, in the attaching process, a curved surface (G1) of the attached object (G) and the pressing member (122) that is deformed by the filled space (123) jointly clamp and press against the flexible sheet (520) and the attaching object (O), so that the attaching object (O) is deformed and adhered onto the curved surface (G1) of the attached object (G), and wherein, when the flexible sheet (520) is compressed to increase a tension value thereof to reach a predetermined starting value, the two fixing regions (522) are moved toward the bonding region (521) by a same amount of displacement through the two buffering assemblies (530).

8. The attaching apparatus (1000) according to claim 7, wherein the flexible sheet (520) includes a bottom film (520a) and a bonding film (520b), the two fixing regions (522) are arranged on the bottom film (520a), the bonding region (521) is arranged on the bonding film (520b), and a coefficient of elasticity of the bonding film (520b) is less than a coefficient of elasticity of the bottom film (520a), and wherein the predetermined starting value is less than a tension threshold value where the bottom film (520a) ruptures or is elastically fatigued.

9. The attaching apparatus (1000) according to claim 7, wherein any one of the two buffering assemblies (530) includes an elastic member (531) and a positioning member (532) that is movably disposed on the frame (510), and the two fixing regions (522) are respectively fixed to the positioning members (532) of the two buffering assemblies (530), and wherein, in the any one of the two buffering assemblies (530), the elastic member (531) is fixed to the frame (510) and the positioning member (532), so that the positioning member (532) is elastically movable relative to the frame (510) through the elastic member (531).

10. The attaching apparatus (1000) according to claim 9, wherein the frame (510) has a plurality of guiding rails (5111), and the positioning members (532) of the two buffering assemblies (530) are movably disposed on the guiding rails (5111), and wherein, when the flexible sheet (520) is compressed to increase the tension value thereof to reach the predetermined starting value, each of the positioning members (532) of the two buffering assemblies (530) are moved along the guiding rails (5111) relative to the frame (510) by the same amount of displacement.

11. The attaching apparatus (1000) according to claim 1, wherein the upper pressing mechanism (110) includes a carrying surface (1123) configured to hold the attached object (G) having a first curved surface (G1) and a second curved surface (G2), which have different centers of curvature, wherein the lower pressing mechanism (120) includes two pressing modules (12a) being independently operable for respectively facing toward the first curved surface (G1) and the second curved surface (G2), wherein each of the two pressing modules (12a) has a filled space (123), a filling opening (124) being in spatial communication with the filled space (123), and a pressing member (122) that defines at least part of the filled space (123), wherein any one of the two pressing modules (12a) is configured to fill a fluid into the filled space (123) through the filling opening (124), so that the filled space (123) expands to deform the pressing member (122), wherein the attaching intermediary (500a) includes a frame (510), a buffering assembly (530) movably assembled to the frame (510), and a flexible sheet (520), wherein the flexible sheet (520) includes a bonding region (521), a first fixing region (522), and a second fixing region (523), wherein the first fixing region (522) and the second fixing region (523) are respectively located at two opposite sides of the bonding region (521), wherein the bonding region (521) is configured to adhere with the attaching object (O), the first fixing region (522) is fixed to the buffering assembly (530), and the second fixing region (523) is fixed to the frame (510), wherein, in the attaching process, the first curved surface (G1) of the attached object (G) and the pressing member (122) that faces toward the first curved surface (G1) and that is deformed by the filled space (123) jointly clamp and press against the flexible sheet (520) and the attaching object (O), so that the attaching object (O) is deformed and adhered onto the first curved surface (G1) of the attached object (G), and wherein, when the flexible sheet (520) is compressed to increase a tension value thereof to reach a predetermined starting value, the first fixing region (522) is moved toward the bonding region (521) by an amount of displacement through the buffering assembly (530).

12. The attaching apparatus (1000) according to claim 11, wherein the frame (510) includes two end portions (511) that are arranged on two opposite ends thereof and a fixing portion (513) that is disposed between the two end portions (511), the buffering assembly (530) is movably assembled to one of the two end portions (511), and the second fixing region (523) is fixed to the fixing portion (513), and wherein the bonding region (521) is spaced apart from the buffering assembly (530) by a first distance (LI), and the bonding region (521) is spaced apart from the fixing portion (513) by a second distance (L2) that is different from the first distance (LI).

13. The attaching apparatus (1000) according to claim 11, wherein the frame (510) includes two end portions (511) that are arranged on two opposite ends thereof and a fixing portion (513) that is disposed between the two end portions (511), the buffering assembly (530) is movably assembled to one of the two end portions (511), the second fixing region (523) is fixed to the fixing portion (513), and the attaching intermediary (500a) has a thru-hole (514) arranged between the fixing portion (513) and another one of the two end portions (511), and wherein, in the attaching process, the thru-hole (514) of the attaching intermediary (500a) is configured to provide for insertion of the second curved surface (G2) of the attached object (G).

14. The attaching apparatus (1000) according to claim 11, wherein the flexible sheet (520) includes a bottom film (520a) and a bonding film (520b), the first fixing region (522) and the second fixing region (523) are arranged on the bottom film (520a), the bonding region (521) is arranged on the bonding film (520b), and a coefficient of elasticity of the bonding film (520b) is less than a coefficient of elasticity of the bottom film (520a), and wherein the predetermined starting value is less than a tension threshold value where the bottom film (520a) ruptures or is elastically fatigues.

15. The attaching apparatus (1000) according to claim 1, wherein the lower pressing mechanism (120) and the upper pressing mechanism (110) are movable relative to each other between a sealed position and an open position, wherein the attaching apparatus (1000) further includes a suction mechanism (140) connected to at least one of the lower pressing mechanism (120) and the upper pressing mechanism (110), and wherein, when the lower pressing mechanism (120) and the upper pressing mechanism (110) are at the sealed position, the lower pressing mechanism (120) and the upper pressing mechanism (110) surroundingly form a work space (P), and the suction mechanism (140) is configured to suction away air in the work space (P) so as to allow the work space (P) to be in a vacuum state.
